# EUROPEAN PATENT APPLICATION

(11) **EP 2 319 772 A1**
(43) Date of publication of application: **11.05.2011**
(21) Application number: 10189903.7
(22) Date of filing: 03.11.2010
(51) Int. Cl.: B65D 25/28, B21D 1/00, B29C 65/00, B32B 37/00

(54) **Top plate for metal can, method and apparatus for repairing assembling damages**

(30) Priority: 05.11.2009 JP 2009254370; 18.05.2010 JP 2010114330
(71) Applicant: Sanko Seikan Co., Ltd, Soka-shi, Saitama 340-0002 (JP); Namikata, Yoshihiro, Matsudo-shi, Chiba 270-2214 (JP)
(72) Inventor: Namikata, Yoshihiro, Matsudo-shi Chiba 270-2214 (JP); Ozawa, Yoshio, Soka-shi Saitama 340-0002 (JP); Sakamoto, Yuka, Soka-shi Saitama 340-0002 (JP)
(74) Representative: McIlroy, Steven David

(57) **Abstract**

[PROBLEMS] A top plate for a metal can, and a correction method and a correction apparatus for the top plate for a metal can are provided that can suitably correct a damaged portion of a laminated layer damaged during spot welding for attaching a hand ring, while preventing environmental contamination.

[MEANS FOR SOLVING PROBLEMS] A correction film 15 for correcting a damaged portion 14 of a laminated layer 5 damaged by spot welding is formed over a film formation area in a predetermined area including the damaged portion 14 on one surface of a top plate body 3. The correction film 15 is press-bonded onto the film formation area by a heated roller 41 having an outer circumferential surface shape corresponding to a surface shape of the film formation area.

## Description

### TECHNICAL FIELD

The present invention relates to a top plate for a metal can, and a correction method and a correction apparatus for the top plate for a metal can. In particular, the present invention relates to a top plate for a metal can, and a correction method and a correction apparatus for the top plate for a metal can suitable for correcting a damaged portion of a laminated layer that is damaged when a clip plate for attaching a hand ring is spot-welded to a top plate body made of a laminated metal sheet on which the laminated layer is formed.

### BACKGROUND ART

Metal cans, such as 18-liter cans, configured by a top plate, a can body, and a bottom plate have been conventionally used as a means for storing various liquid contents, such as oil, paint, chemical, and food.

As this type of metal can, a metal can in which a laminate layer made of a resin material is formed on the can interior surface has been popular, from the viewpoint of preventing corrosion of the can (rust formation and the like) as well as degradation of the quality of the can contents.

Furthermore, as a top plate for 18-liter cans, a top plate to which a hand ring for gripping the can is attached has been conventionally used, taking into consideration convenience when transporting.

To obtain a top plate such as this, an operation for attaching the hand ring to the top plate body is required to be performed. Spot welding has been conventionally used as a method of attaching the hand ring.

In other words, to attach the hand ring to the top plate body, a base end section of the hand ring is disposed such as to be sandwiched between the surface of the top plate body on the can exterior surface side and a clip plate for attaching the hand ring in a manner allowing play. The clip plate is then spot-welded to the top plate body.

In this way, the hand ring is attached between the top plate body and the clip plate by the base end section of the hand ring, such as to stand upright and collapse freely.

Here, damage, such as tearing and peeling, to the laminated layer formed on the surface of the top plate on the can interior surface side as a result of heat from spot welding has conventionally been a problem.

To solve problems such as this, for example, a method of correcting the damaged portion of the laminated layer by performing baking finish using a liquid paints, such as varnish, has been known.

Patent document 1: Japanese Patent Laid-open Publication No. 09-99941 (refer to paragraph 0003, in particular)

### DISCLOSURE OF THE INVENTION

### PROBLEM TO BE RESOLVED BY THE INVENTION

However, in the conventional correction method using baking finish, because a liquid paints is used, the film thickness of the coating film is insufficient, as well as unstable. The damaged portion of the laminated layer cannot be suitably corrected, and a problem occurs in that, depending on the can contents, a portion of the can interior surface corresponding to the damaged portion becomes corroded.

In addition, in this conventional correction method, a problem also occurs in that solvent and the like are dispersed into the atmosphere when the liquid paints is baked, thereby causing environmental contamination.

Therefore, the present invention has been achieved in view of these problems. An object of the present invention is to provide a top plate for a metal can, and a correction method and a correction apparatus for the top plate for a metal can capable of suitably correcting a damaged portion of a laminated layer damaged during spot welding for attaching a hand ring, while preventing environmental contamination.

### MEANS FOR SOLVING PROBLEM

To achieve the above-described object, a top plate for a metal can according to an aspect of the present invention is a top plate for a metal can including: a top plate body made of a laminated metal sheet of which at least one surface in a thickness direction is formed by a laminated layer; a clip plate for attaching a hand ring that is spot-welded onto another surface in the thickness direction of the top plate body; and a hand ring that is attached between the clip plate and the top plate body by a base end section such as to stand upright and collapse freely. In the top plate for a metal can, a correction film for correcting a damaged portion of the laminated layer damaged by spot welding is formed over a film formation area in a predetermined area including the damaged portion on the one surface of the top plate body. The correction film is press-bonded onto the film formation area by a heated roller having an outer circumferential surface shape corresponding to a surface shape of the film formation area.

Here, the correction film may be made of a same resin material as the laminated layer.

A correction method for a top plate for a metal can according to an aspect of the present invention is a correction method for a top plate for a metal can that corrects a damaged portion of a laminated layer of a top plate for a metal can damaged by spot welding. The top plate for a metal can includes: a top plate body made of a laminated metal sheet of which at least one surface in a thickness direction is formed by the laminated layer; a clip plate for attaching a hand ring that is spot welded onto another surface in the thickness direction of the top plate body; and a hand ring that is attached between the clip plate and the top plate body by a base end section such as to stand upright and collapse freely. In the correction method for a top plate for a metal can, in a state in which a correction film of a size corresponding to a film formation area in a predetermined area including the damaged portion on the one surface of the top plate body is disposed on the film formation area, a heated roller having an outer circumferential surface shape corresponding to a surface shape of the film formation area is relatively moved over the film formation area while pressing from above the correction film towards the film formation area side. As a result, the correction film is press-bonded onto the film formation area.

Here, a section in a predetermined area of the top plate body may be a spot welding area in which a plurality of welding points for spot welding between the top plate body and the clip plate are to be formed, and the clip plate is to be spot-welded. In the spot welding area, the other surface in the thickness direction may project towards another side in the thickness direction, and the one surface in the thickness direction may be formed recessing towards the other side in the thickness direction. When press bonding the correction film, a heated roller of which a section of the outer circumferential surface projects in correspondence with the one surface of the spot welding area may be used as the heated roller.

In addition, after the heated roller laminates the correction film, a second heated roller may be relatively moved over the film formation area while pressing from above the correction film towards the film formation area side. As a result, adhesion of the correction film to the top plate body may be strengthened.

Furthermore, a correction apparatus for a top plate for a metal can according to an aspect of the present invention is a correction apparatus for a top plate for a metal can that corrects a damaged portion of a laminated layer of a top plate for a metal can damaged by spot welding. The top plate for a metal can includes: a top plate body made of a laminated metal sheet of which at least one surface in a thickness direction is formed by the laminated layer; a clip plate for attaching a hand ring that is spot-welded onto another surface in the thickness direction of the top plate body; and a hand ring that is attached between the clip plate and the top plate body by a base end section such as to stand upright and collapse freely. The correction apparatus includes : a top plate transportingmeans for transporting the top plate for a metal can on a predetermined transport path; a top plate feeding means capable of successively feeding a plurality of top plates for ametal can onto the transport path one top plate at a time; a top plate drying means for heating the top plate for a metal can, the top plate drying means being disposed in a position downstream from the top plate feeding means on the transport path; a film feeding means for feeding a correction film cut into a size corresponding to a film formation area in a predetermined area including the damaged portion on the one surface of the top plate body onto the film formation area of the top plate for a metal can after drying by the top plate drying means, the film feeding means being disposed in a position downstream from the top plate drying means on the transport path; a film laminating means for press-bonding the correction film onto the film formation area on the top plate for a metal can after feeding of the correction film by the film feeding means, the film laminating means being disposed in a position downstream from the film feeding means on the transport path; a heat treatment means for performing heat treatment on the top plate for a metal can to strengthen adhesion of the correction film onto the top plate body after press bonding of the correction film by the film laminating means, the heat treatment means being disposed in a position downstream from the film laminating means on the transport path; and a top plate cooling means for cooling the top plate for a metal can after the heat treatment by the heat treatment means, the top plate cooling means being disposed in a position downstream from the heat treatment means on the transport path. In the correction apparatus for a top plate of a metal can, the film laminating means includes: a first heated roller having an outer circumferential surface shape corresponding to a surface shape of the film formation area and a outer circumferential surface shape of which a section of the outer circumferential surface projects outward to correspond to the surface shape of an area in a predetermined area corresponding to a plurality of welding points for spot welding within the film formation area; a first pressing means for pressing the first heated roller from above the correction film fed onto the film formation area towards the film formation area side; a first moving means for relatively moving the first roller over the film formation area while being pressed by the first pressing means; a second heated roller; a second pressing means for pressing, after press bonding of the correction film by the first heated roller, the second heated roller from above the press-bonded correction film towards the film formation area side; and a second moving means for relatively moving the second roller over the film formation area while being pressed by the second pressing means.

Here, in the present invention, the correction film having superior thickness, as well as stability and evenness of the thickness, compared to a liquid coating can be press-bonded onto the film formation area with sufficient adhesion by the heated roller having an outer circumference surface shape corresponding to the surface shape of the film formation area. Therefore, the damaged portion of the laminated layer can be suitably corrected, and corrosion of an area on a can interior surface corresponding to the damaged portion can be prevented with certainty. In addition, in the present invention, the damaged portion of the laminated layer can be suitably corrected even when warping of the top plate body occurs as a result of heat during spot welding and mouth processing. Furthermore, harmful materials, such as solvents, are not dispersed during press bonding of the correction film, unlike during baking finish. Therefore,environmentalcontamination can be prevented. Still further, when the correction film is made of a same resin material as the laminated layer, cost can be reduced in addition to the damaged portion being suitably corrected. When adhesion of the correction film to the top plate body is further strengthened by the second heated roller after the correction film is heat-welded by the heated roller, the damaged portion of the laminate layer can be more suitably corrected. Furthermore, when the correction of the damaged portion of the laminate layer is automatically performed on a series of lines, the correction can be efficiently performed, and mass-production of the top plate for a metal can be improved.

In the correction apparatus for a top plate for a metal can that performs the method of the present invention, at least the film feeding means and the film laminating means are required to be included.

### EFFECT OF THE INVENTION

In the present invention, a damaged portion of a laminated layer damaged during spot welding for attaching a hand ring can be suitably corrected, while preventing environmental contamination.

### BRIEF DESCRIPTION OF DRAWINGS

Fig. 1 is a planar view of a top plate for a metal can according to an embodiment of the present invention;
Fig. 2 is a bottom view of Fig. 1;
Fig. 3 is a cross-sectional view taken along line A-A in Fig. 2;
Fig. 4 is a cross-sectional view taken along line B-B in Fig. 2;
Fig. 5 is a schematic planar view of an overall configuration of a correction apparatus for the top plate for a metal can according to the embodiment of the present invention;
Fig. 6 is a schematic configuration diagram of a plate feeding device of the correction apparatus for the top plate for a metal can according to the embodiment of the present invention;
Fig. 7 is a schematic configuration diagram of a film laminating device of the correction apparatus for the top plate for a metal can according to the embodiment of the present invention;
Fig. 8 is a front view of a first heated roller of the correction apparatus for the top plate for a metal can according to the embodiment of the present invention;
Fig. 9 is a side view of Fig. 8;
Fig. 10 is a front view of a second heated roller of the correction apparatus for the top plate for a metal can according to the embodiment of the present invention;
Fig. 11 is a side view of Fig 10;
Fig. 12 is a planar view of a plate holding section of the correction apparatus for the top plate for a metal can according to the embodiment of the present invention;
Fig. 13 is a side view and a partial cross-sectional view of Fig. 12; and
Fig. 14 is a schematic side view and an enlarged view of main sections of a transport conveyor within an electrical heating furnace.

### BEST MODE(S) FOR CARRYING OUT THE INVENTION

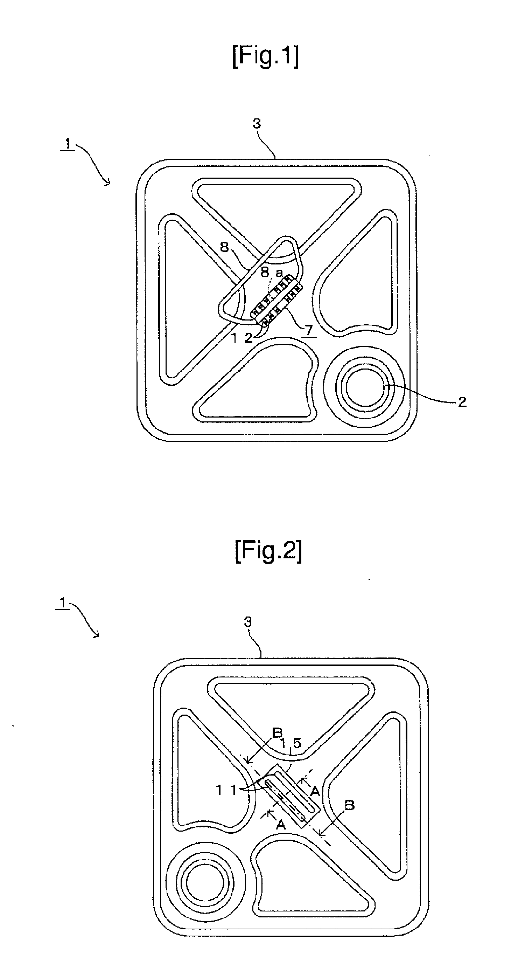

Embodiments of a top plate for a metal can, and a correction method and a correction apparatus for the top plate for a metal can will hereinafter be described with reference to Fig. 1 to Fig. 14.

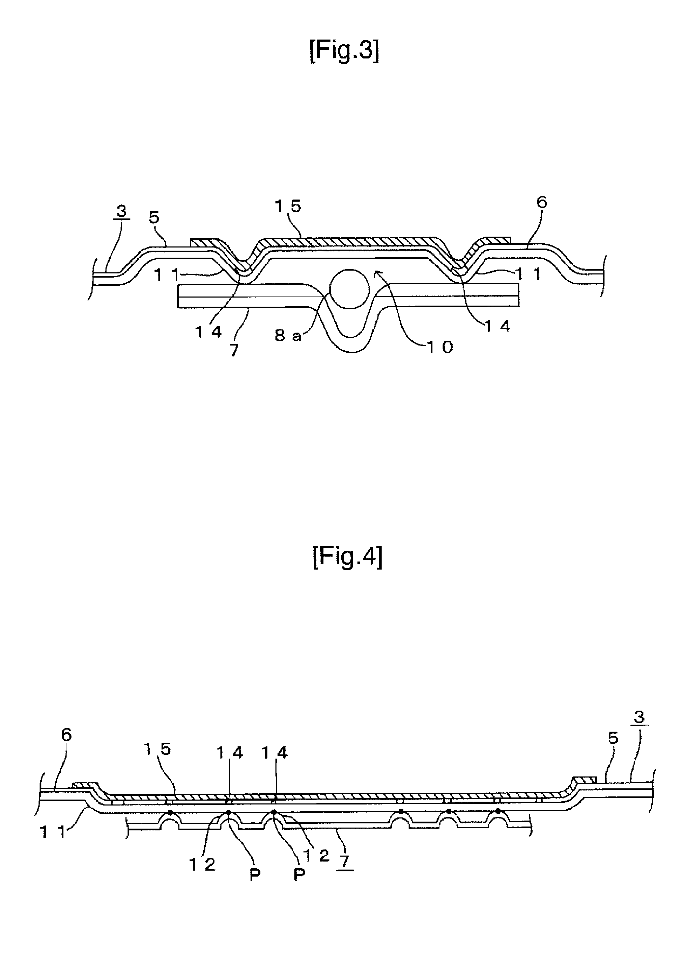

Fig. 1 is a planar view of a top plate 1 for a metal can according to an embodiment. Fig. 2 is a bottom view of Fig. 1. Fig. 3 is a cross-sectional view taken along line A-A in Fig. 2. Fig. 4 is a cross-sectional view taken along line B-B in Fig. 2.

As shown in Fig. 1 and Fig. 2, the top plate 1 for a metal can has a top plate body 3 having a roughly square planar shape and including a mouth 2.

The top plate body 3 is made of a laminated steel sheet serving as a laminated metal sheet. As shown in Fig. 3 and Fig. 4, one surface of the top plate body 3 in the thickness direction (the upper surface in Fig. 3 and Fig. 4) (referred to, hereinafter, as a can interior surface side) is configured by a laminated layer 5 made of a resin material laminated on a steel sheet 6. The laminated layer 5 prevents the steel sheet 6 from coming into direct contact with content within the can, when the top plate 1 for a metal can configures a metal can (not shown).

In addition, the other surface of the top plate body 3 in the thickness direction (the lower surface in Fig. 3 and Fig. 4) (referred to, hereinafter, as a can exterior surface side) is configured by a laminated layer (not shown) made of a resin material laminated on the steel sheet 6, excluding an area in which a clip plate for attaching a hand ring, described hereafter, is attached.

Tin-free steel, for example, can be suitably used for the steel sheet 6. A polyethylene terephthalate (PET) resin film, for example, can be suitably used as the resin material configuring the laminated layer 5.

The present invention includes, as an alternative to the laminate layer 5, a layer formed by coating the steel sheet 6 with a resin coating, such as an epoxy-phenol resin or an epoxy-urea resin.

As shown in Fig. 1 and Fig. 3, a clip plate 7 for attaching a hand ring (referred to, hereinafter, as a hand-ring clip plate) having a roughly Ω-shaped cross-section is spot-welded to the surface of the top plate body 3 on the can exterior surface side, with a gap 10 for disposing the hand ring (see Fig. 3) provided between the hand-ring clip plate 7 and the top plate body 3. A base end section 8a of a hand ring 8 is then disposed in the gap 10 between the hand-ring clip plate 7 and the top plate body 3 in a manner allowing play.

In this way, the hand ring 8 is attached between the hand-ring clip plate 7 and the top plate body 3 by the base end section 8a, such as to stand upright and collapse freely.

More specifically, as shown in Fig. 2 to Fig.4, a section of the top plate body 3 in a predetermined area in the center serves as a spot welding area 11 in which a plurality of welding points for spot welding between the top plate body 3 and the hand-ring clip plate 7 are to be formed, and the hand-ring clip plate 7 is to be spot-welded.

As shown in Fig. 2 to Fig. 4, according to the embodiment, two spot welding areas 11, 11 are formed. The two spot welding areas 11, 11 are both elongated in one diagonal direction (a direction that is roughly 45 degrees to the left in Fig. 2) of the top plate body 3 and aligned in parallel with space in the other diagonal direction (a direction that is roughly 45 degrees to the right in Fig. 2) of the top plate body 3 perpendicular to the one diagonal direction.

As shown in Fig. 3, each spot welding area 11 and 11 is formed having a projecting shape in which the surface on the can exterior surface side projects towards the can exterior surface side, and the surface on the can interior surface side recesses towards the can exterior surface side.

On the other hand, as shown in Fig. 1 and Fig. 4, a plurality of U-shaped projections 12 (12 projections in Fig. 1) projecting towards the top plate body 3 side are formed in the hand-ring clip plate 7, in a longitudinal direction of the hand-ring clip plate 7 (a direction angled to the right in Fig. 1, and the horizontal direction in Fig. 4) and the direction perpendicular thereto (a direction angled to the left in Fig. 1) with space.

Then, as shown in Fig. 4, in a state in which the surface of each projection 12 on the top plate body 3 side of the hand-ring clip plate 7 is in contact with the surface of the opposing spot welding area 11 and 11 on the can exterior surface side, a welding point P is formed for each projection 12, between the projections 12 and the spot welding areas 11 and 11. The hand-ring clip plate 7 is thereby spot-welded onto the spot welding areas 11 and 11.

As a result of spot welding such as this, a plurality of welding points P are formed in an array along the longitudinal direction in each spot welding area 11 and 11.

Furthermore, as a result of spot welding, a damaged portion (a crack, a peeled portion, and the like) 14 is formed in the laminated layer 5 by welding heat during spot welding in positions on the can interior surface of each spot welding area 11 and 11 corresponding to the welding points P.

When no countermeasure is taken against such damaged portions 14, the damaged portion 14 leads corrosion of the steel sheet 6 by the content within the can when the top plate 1 for a metal can configures a metal can.

Therefore, according to the embodiment, a means for correcting such damaged portions 14 is taken.

In other words, as shown in Fig. 2 to Fig. 4, a correction film 15, made of a resin material and having a rectangular planar shape, used to correct each damaged portion 14 is formed on a film formation area on the surface of the top plate body 3 on the can interior surface side, the film formation area covering a predetermined area including each damagedportion 14. The film formation area includes the surface of each spot welding area 11 and 11 on the can interior surface side.

According to the embodiment, the correction film 15 is press-bonded onto the film formation area by a heated roller having an outer circumferential surface shape corresponding to a surface shape of the film formation area. Details of the heated roller will be described hereafter.

The same resin material as that configuring the laminate layer 5 (polyethylene terephthalate PET), for example, can be suitably used as the resin material configuring the correction film. In addition to PET, polypropylene (PP) and polyethylene (PE) can be used as the resin material configuring the correction film.

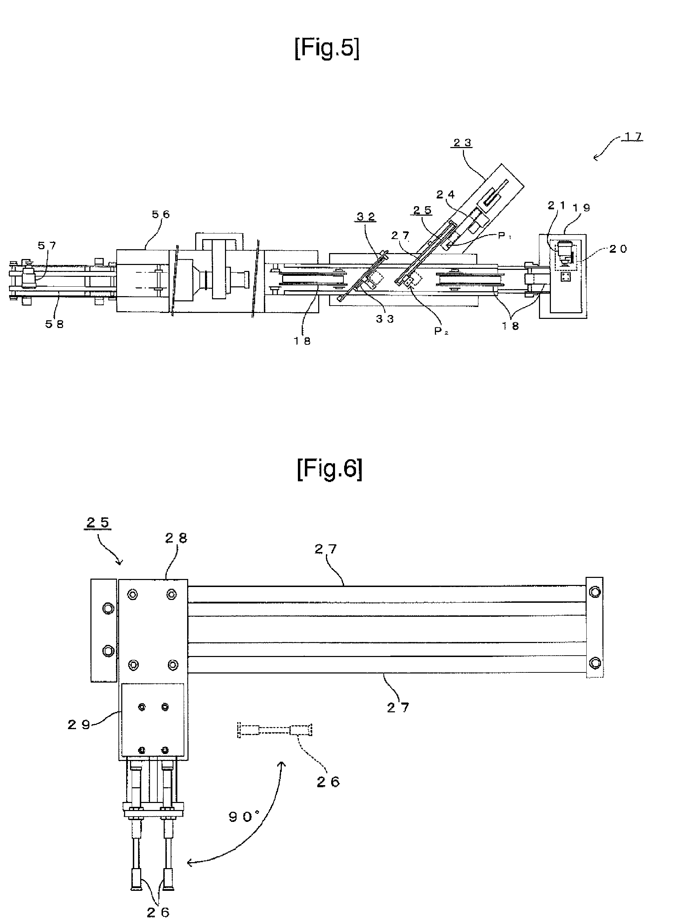

The top plate 1 for a metal can such as that described above can be obtained by, for example, a correction apparatus 17 shown in Fig. 5 to Fig. 14.

The correction apparatus 17 is capable of automatically correcting the damaged portions 14, described above, of the top plate 1 for a metal can on a series of lines.

In other words, as shown in Fig. 5, as a top plate transporting means for transporting the top plate 1 for a metal can on its transport path (referred to, hereinafter, as a top plate transport path), the correction apparatus 17 has a plurality of transport conveyors 18 successively disposed on the top plate transport path. Each transport conveyor 18 receives and sends the top plate 1 for a metal can from a preceding step to a following step by tact feeding, in a series of steps for correcting the damaged portions 14, described hereafter. Each transport conveyor 18 is independently driven by a drive source, such as a motor (not shown). The drive source of each transport conveyor 18 is drive-controlled by a controlling section (microcomputer) (not shown) that electrically controls the operation of the overall correction apparatus 17.

As shown in Fig. 5, the correction apparatus 17 has a top plate feeding device 19 serving as a top plate feeding means. In the top plate feeding device 19, a plurality of top plates 1 for a metal can before correction of the damaged portions 14 are housed such as to be stacked in a vertical direction with the surface on the can interior surface side facing vertically upward. The top plate feeding device 19 successively feeds the stacked and housed plurality of top plates 1 for a metal can to an upstream end of the top plate transport path, one top plate 1 for a metal can at a time, in sequence from the uppermost top plate 1 for a metal can, by tact-feeding. The operation for feeding the top plates for a metal can start by a feeding command signal being inputted from the controlling section. The top plate feeding device 19 may be configured to suction the top plate 1 for ametal can, stacked and housed in the storage position, onto a vacuum head, thereby removing the top plate 1 for a metal can from the storage position. The top plate feeding device 19 may then send the removed top plate 1 for a metal can to a hanging conveyor (not shown) provided with a magnet that serves as a top plate transporting means on the side furthest upstream.
In this instance, the hanging conveyor suspends the top plate 1 for a metal can received from the top plate feeding device 19 using the magnetic force of the magnet and transports the suspended plate 1 for a metal can towards the transport conveyor 18 on the side furthest upstream by tact-feeding.

Furthermore, as shown in Fig. 5, a top plate cleaning device 20 serving as a top plate cleaning means is disposed in a position downstream from the top plate feeding device 19 on the top plate transport path. The top plate cleaning device 20 uses a volatile cleaning solution to wipe clean the top plate 1 for a metal can transported to the downstream side by a top plate transporting means (such as the hanging conveyor) after being fed onto the top plate transport path by the top plate feeding device 19. Specifically, the top plate cleaning device 20 may include a mechanism for automatically wiping at least the film formation area of the top plate 1 for a metal can using a piece of felt coated with ethanol.

As a result of a cleaning procedure such as this by the top plate cleaning device 20, contaminants, such as oil, dust, and moisture dispersed during top plate working procedures, such as spot welding of the hand-ring clip plate 7 and mouth processing, can be removed.

When conditions allow, such as when at least the film formation area of the top plate 1 for a metal can is in a state allowing press bonding of the correction film 15, the cleaning procedure by the top plate cleaning device 20 or the top plate cleaning device 20 itself may be omitted.

Still further, as shown in Fig. 5, a top plate drying device 21 serving as a top plate drying means is disposed in a position downstream from the top plate cleaning device 20 on the top plate transport path. The top plate drying device 21 uses hot air to dry each top plate 1 for a metal can that has been cleaned by the top plate cleaning device 20. The top plate drying device 21 may include a known hot air generator. The hot air should be blown on both top and bottom surfaces of the top plate 1 for a metal can.

As a result of a drying procedure such as this by the top plate drying device 21, moisture that has been attracted from the air and deposited onto the top plate 1 for a metal can can be evaporated when the volatile cleaning solution (such as ethanol) evaporates.

In addition, the top plate drying device 21 can be configured to perform drying by infrared heaters or near-infrared heaters (not shown) being disposed on both top and bottom surface sides of the top plate 1 for a metal can.

When the top plate cleaning device 20 is omitted, the top plate drying device 21 may also be omitted. If preheating is to be performed when press bonding of the correction film is performed on the downstream side, the top plate drying device 21 is preferably not omitted.

As shown in Fig. 5, a film feeding device 23 serving as a film feeding means is disposed in a position downstream from the top plate drying device 21 on the top plate transport path. The film feeding device 23 feeds the correction film 15 onto the film formation area of the top plate 1 for a metal can transported on the top plate transport path by the transport conveyor 18 after being dried by the top plate drying device 21.

Specifically, the film feeding device 23 has a film cutting device 24 that, while feeding out the correction film that is in a rolled state successively from the head of the roll, cuts the fed-out correction film to a predetermined length (size) corresponding to the area of the film formation area. The cut correction film 15 is positioned in a standby position indicated by P1 in Fig. 5.

As shown in Fig. 5 and Fig. 6, the film feeding device 23 has a suction transporting device 25 that transports the correction film 15 cut by the film cutting device 24 from the standby position P1 to a feeding position indicated by P2 in Fig. 5. As shown in Fig. 6, the suction transporting device 25 includes suction pads 26, a first film feeding air cylinder 28, and a second film feeding air cylinder 28. The first film feeding air cylinder 28 moves the suction pads 26 back and forth along a longitudinal direction of cylinder tubes 27. The second film feeding air cylinder 29 is capable of adjusting the position of the suction pads 26 within an angle range of 90 degrees between the position of the pads 26 indicated using solid lines and the position of the pad 26 indicated using broken lines in Fig. 6. The first film feeding air cylinder 28 may be a known rod-less cylinder. The second film feeding air cylinder 29 may be a known rotating cylinder with a heat-resistant auto-switch. In the suction transporting device 25 such as this, the correction film 15 positioned in the standby position P1 is suctioned by the suction pads 26, and the suctioned correction film 15 is transported to the feeding position P2 with the suction pads 26 by the first film feeding air cylinder 28. Then, at the feeding position P2, the second film feeding air cylinder 29 positions the suction pads 26 such that the correction film 15 suctioned by the suction pads 26 comes into contact with the film formation area and places the correction film 15 on the film formation area by releasing the suction of the suction pads 26.
Adjustability when placing the correction film 15 on the film formation area may be enhanced by the suction pads 26 being provided with a spring cushion.

The correction film 15 is fed onto the film formation area in this way. As shown in Fig. 5, the direction in which the correction film 15 is transported by the suction transporting device 25 is at a roughly 45 degree angle to the transporting direction of the top plate 1 for a metal can. This directly reflects the relationship of the orientation of the correction film 15 to the orientation of the top plate 1 for a metal can as shown in Fig. 2. In other words, with reference to Fig. 2, while the transporting direction of the top plate 1 for a metal can is the downward direction in Fig. 2, the transporting direction of the correction film 15 is the lower-rightward direction in Fig. 2.

After being fed the correction film 15, the top plate 1 for a metal can is transported over the top plate transport path to a following procedure by a transporting means (not shown) such as a transport conveyor.

Returning to Fig. 5, a film laminating device 32 serving as a film laminating means is provided in a position downstream from the film feeding device 23 on the top plate transport path. The film laminating device 32 press-bonds the correction film 15 onto the film formation area of the top plate 1 for a metal can that has been fed the correction film 15 by the film feeding device 23.

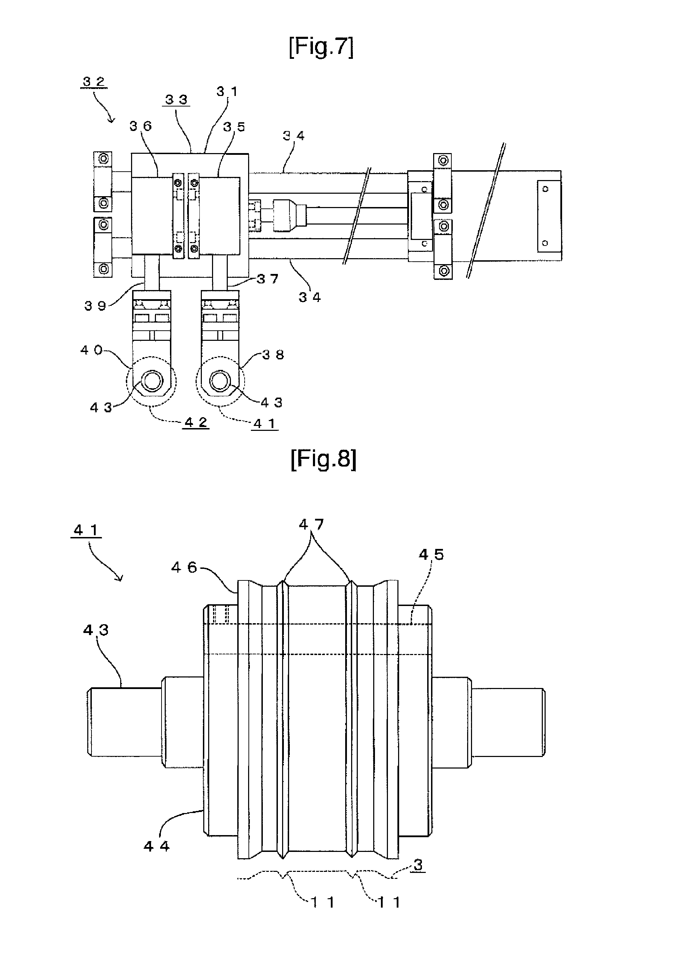

Specifically, as shown in Fig. 7, thefilmlaminating device 32 has a first laminating air cylinder 33 serving as a first moving means and a second moving means. The first laminating air cylinder 33 has cylinder tubes 34 that are elongated in the horizontal direction in Fig. 7 and a moving section 31 that is capable of moving back and forth in the longitudinal direction of the cylinder tubes 34 as a result of the cylinder tubes 34 being supplied with air. As shown in Fig. 5, the cylinder tubes 34 of the first laminating air cylinder 33 are parallel to the cylinder tubes 27 of the first film feeding air cylinder 28, described above.

In addition, as shown in Fig. 7, a second laminating air cylinder 35 serving as a first pressing means and a third laminating air cylinder 36 serving as a second pressing means are fixed to the moving section 31 by a fixing means, such as a bolt, spaced apart in the horizontal direction in Fig. 7.

Furthermore, as shown in Fig. 7, a first heated roller attaching plate 38 is connected to the lower end of a cylinder tube 37 of the second laminating air cylinder 35. The first heated roller attaching plate 38 is capable of moving up and down by the second laminating air cylinder 35. The first heated roller attaching plate 38 is provided as a pair, spaced apart from each other in a direction perpendicular to the paper surface on which Fig. 7 is printed. The pair of first heated roller attaching plates 38, 38 form a bracket structure.

Still further, as shown in Fig. 7, a second heated roller attaching plate 40 is connected to the lower end of a cylinder tube 39 of the third laminating air cylinder 36. The second heated roller attaching plate 40 is capable of moving up and down by the third laminating air cylinder 36. The second heated roller attaching plate 40 is also provided as a pair, spaced apart from each other in a direction perpendicular to the paper surface on which Fig. 7 is printed. The pair of second heated roller attaching plates 40, 40 form a bracket structure.

Between the pair of first heated roller attaching plates 38, 38, a first heated roller 41 serving as a first heated roller is provided such as to rotate freely, as shown in Fig. 7 to Fig. 9.

On the other hand, between the pair of second heated roller attaching plates 40, 40, a second heated roller 42 serving as a second heated roller is provided such as to rotate freely, as shown in Fig. 7, Fig. 10, and Fig. 11.

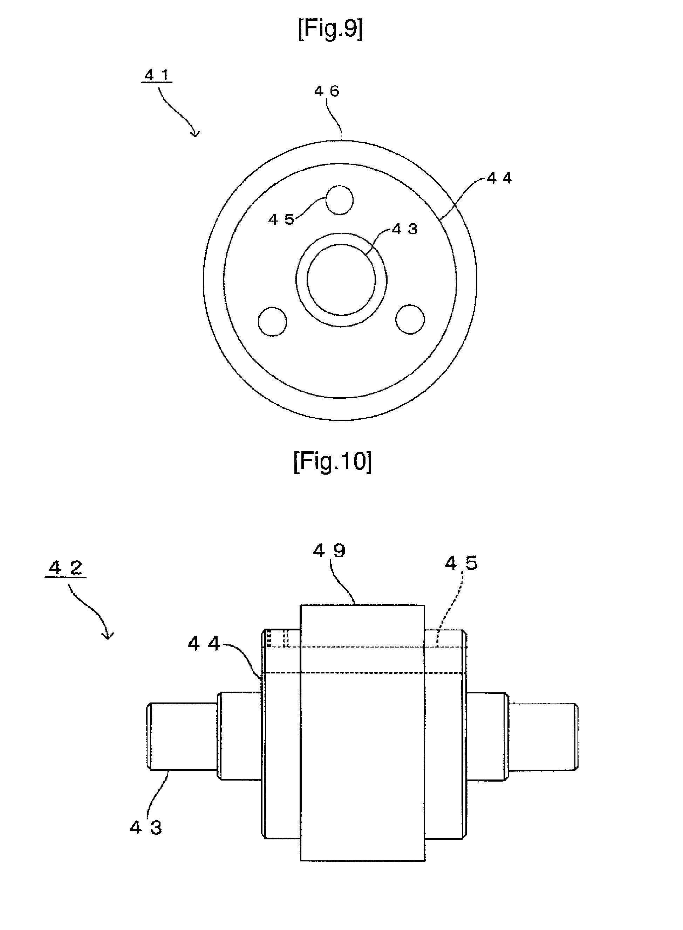

Here, first, the first heated roller 41 will be described in further detail. As shown in Fig. 8 and Fig. 9, the first heated roller 41 has a rotating shaft 43 held by the first heated roller attaching plates 38 such as to rotate freely. A roughly cylindrical flange section 44 is formed integrally with the rotating shaft 43 on the outer side of the rotating shaft 43 in a section in a predetermined area in the center of the rotating shaft 43 in the axial direction. A total of three heaters 45 are embedded in the flange section 44 such as to be evenly spaced in the circumferential direction. A pyrometer (not shown) used to adjust the heating temperature is connected to the heaters 45. A tube-shaped film contacting section 46 made of a heat-resistant elastic material (elastomer) is formed integrally with the flange section 44 on the outer side of the flange section 44 in a section in a predetermined area in the center of the flange section 44 in the axial direction.

As shown in Fig. 8, the film contacting section 46 has a recessing and projecting outer circumferential surface shape that includes sections in which the outer diameter changes along the axial direction. The outer circumferential surface shape of the film contacting section 46 is a shape corresponding to a surface shape of the film formation area almost matching the surface shape of the film formation area of the top plate body 3. For example, as shown in Fig. 8, a pair of triangular projecting surface sections 47, 47 having a predetermined peak angle is formed on the outer circumferential surface of the film contacting section 46, spaced apart from each other in the axial direction. The surface shape of the projecting surface sections 47, 47 is a surface shape corresponding to the surface shape almost matching the surface shape of the surface of each ridge-shaped spot welding area 11, 11 on the can interior surface side, shown in Fig. 3.

Aluminum having excellent heat conductivity, for example, can be suitably used as a material for the flange section 44. Heat-resistant silicone rubber, for example, can be suitably used as the elastic material configuring the film contacting section 46. A suitable temperature taking into consideration the heat conductivity of the flange section 44 and the film contacting section 46 may be used as the heating temperature (adjusted temperature) of the heaters 45. For example, a temperature (such as 230°C) enabling the temperature of the outer circumferential surface of the film contacting section 46 to become 200°C can be used as a suitable temperature. Furthermore, heaters using various heating methods, such as an infrared heater, can be used as the heater 45.

In an initial state, as shown in Fig. 7, the first heated roller 41 such as that described above is positioned in a home position that is at one end of a horizontal movement range of the first heated roller 41 by the first laminating air cylinder 33. Furthermore, in the initial state, the first heated roller 41 is positioned in an escape position that is at the upper end of the up-down movement range of the first heated roller 41 by the second laminating air cylinder 35.

When the top plate 1 for a metal can is transported to a predetermined press bonding position in which the correction film 15 on the film formation area is positioned directly below the first laminating air cylinder 33, the first heated roller 41 is moved in the downward direction from the escape position by the second laminating air cylinder 35 and is positioned in a pressing position for pressing the correction film 15. At this time, for example, a configuration may be used in which a top plate position detecting means, such as an optical sensor, detects that the top plate 1 for a metal can has been transported to the press bonding position and, based on the detection result, the above-described controlling section moves the first heated roller 41 to the pressing position by drive-controlling the second laminating air cylinder 35. At the pressing position, the first heated roller 41 may be pressing the upstream end in the press bonding direction of the correction film 15 on the film formation area. Alternatively, the first heated roller 41 may be pressing an area of the top plate 1 for a metal can on the upstream side near the upstream end of the correction film 15.

Furthermore, after the first heated roller 41 is moved from the escape position to the pressing position, the first heated roller 41 waits for a predetermined amount of time at the pressing position for the outer circumferential surface of the film contacting section 46 to be heated to a sufficient temperature (such as 200°C) by the heaters 45.

After waiting for the predetermined amount of time, the first heated roller 41 is moved at a predetermined movement speed from the home position towards the other end of the horizontal movement range by the first laminating air cylinder 33, while its position in the up-down direction remains in the pressing position. As a result, the heated first heated roller 41 is moved over the film formation area while being pressed from above the correction film 15 toward the film formation area side, with the film contacting section 46.

As a result of the first heated roller 41 configured as described above, the correction film 15 on the film formation area can be laminated by the heat from the film contacting section 46 that is in contact with the correction film 15 and press-bonded onto the film formation area. At this time, because the outer circumferential surface shape of the film contacting section 46 is formed into a shape corresponding to the surface shape of the film formation area, the correction film 15 can be press-bonded with sufficient adhesion to the top plate body 3.

Then, after press bonding of the correction film 15 is performed in this way, the first heated roller 41 is returned to the escape position similar to that in the initial state by the second welding air cylinder 35 and returned to the home position similar to that in the initial state by the first welding air cylinder 33.

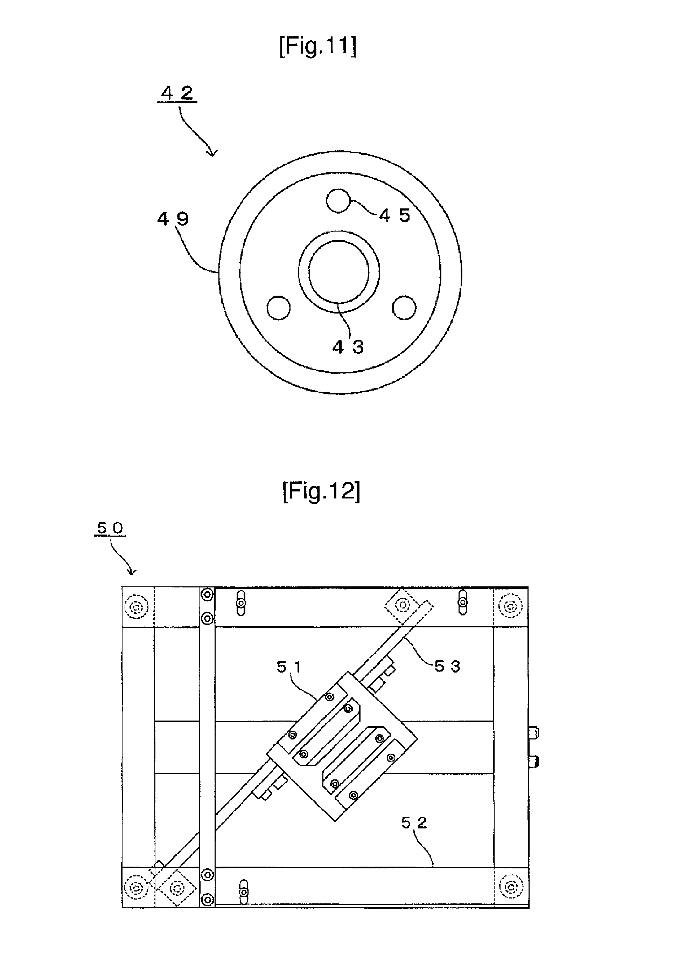

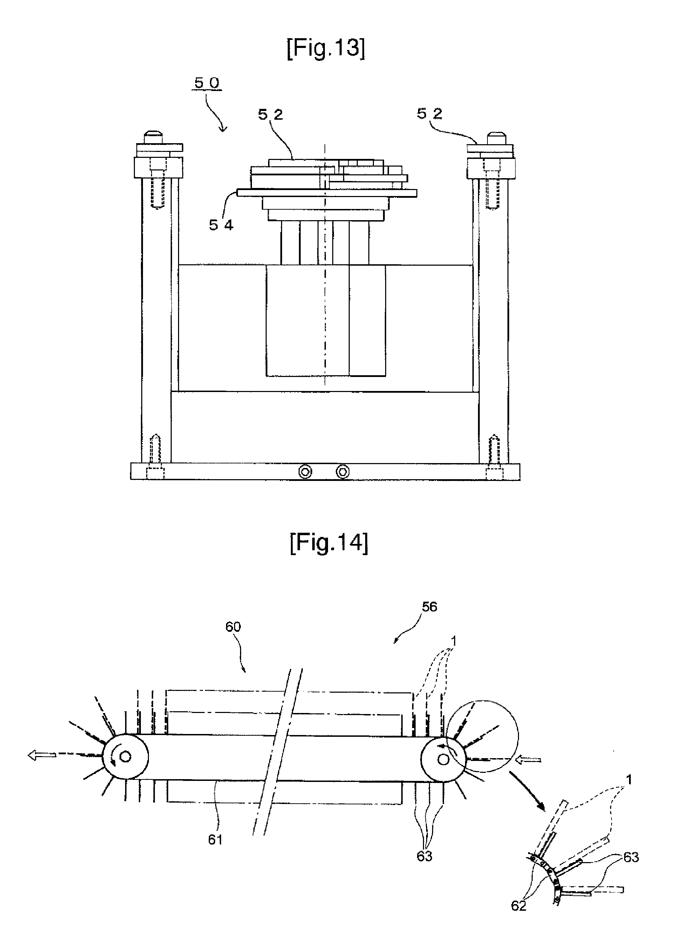

A pressing force of 0.2MPa to 0.3MPa, for example, can be suitably used as the pressing force of the first heated roller 41 in the above-described pressing position. When a pressing force such as this is used, the correction film 15 can be suitably press-bonded with sufficient pressing force, and pressing marks on the top plate 1 for a metal can made by a top plate holding section 50 (see Fig. 12 and Fig. 13) as a result of excessive pressing force can be prevented. The pressing marks mar the visual appearance of the metal can as a product and are preferably reduced as much as possible.

A sufficiently slow speed enabling the first heated roller 41 to move from the upstream end of a 50mm-long correction film 15 to the downstream end in the press bonding direction in one to two seconds, for example, can be suitably used as the movement speed at which the first heated roller 41 is moved over the film formation area to press-bond the correction film 15.

Next, the second heated roller 42 will be described in further detail. As shown in Fig. 10 and Fig. 11, the second heated roller 42 has the rotating shaft 43 that is held by the second heated roller attaching plates 40 such as to rotate freely, the flange section 44, the heaters 45, and a film contacting section 49, in a manner similar to the first heated roller 41.

However, the filmcontacting section 49 of the second heated roller 42 differs from the film contacting section 46 of the first heated roller 41 and has a smooth cylindrical outer circumferential surface shape of which the outer diameter is constant along the axial direction.

In an initial state, as shown in Fig. 7, the second heated roller 42 such as that described above is positioned in a home position that is at one end of a horizontal movement range of the second heated roller 42 by the first welding air cylinder 33. Furthermore, in the initial state, the second heated roller 42 is positioned in an escape position that is at the upper end of the up-down movement range of the second heated roller 42 by the third laminating air cylinder 36.

When the first heated roller 41 press-bonds the correction film 15, the second heated roller 42 is moved horizontally as one with the first heated roller 41 by the first laminating air cylinder 33. However, at this time, the movement position in the up-down direction of the second heated roller 42 remains in the escape position, and the second heated roller 42 is not involved in the press bonding.

Furthermore, after the first heated roller 41 is returned to the home position by the first laminating air cylinder 33 after the first heated roller 41 completes press bonding of the correction film 15, the second heated roller 42 is moved downward from the escape position by the third laminating air cylinder 36 and positioned in a pressing position for pressing the correction film 15.

Still further, after the second heated roller 42 is moved from the escape position to the pressing position, the second heated roller 42 waits for a predetermined amount of time at the pressing position for the outer circumferential surface of the film contacting section 49 to be heated to a sufficient temperature (such as 200°C) by the heaters 45.

After waiting for the predetermined amount of time, the second heated roller 42 is moved at a predetermined movement speed from the home position towards the other end of the horizontal movement range by the first laminating air cylinder 33, while its position in the up-down direction remains in the pressing position. As a result, the heated second heated roller 42 is moved over the film formation area while being pressed from above the correction film 15 toward the film formation area side, with the film contacting section 49 therebetween.

As a result of the second heated roller 42 configured as described above, the correction film 15 that is press-bonded onto the film formation area by the first heated roller 41 is further press-bonded in a reinforcing manner, thereby eliminating as much as possible areas with welding defects, such as poor adhesion. As a result, adhesion of the correction film 15 to the top plate body 3 can be further enhanced.

Subsequently, the second heated roller 42 is returned to the escape position by the third laminating air cylinder 36 and returned to the home position by the first laminating air cylinder 33.

The pressing force of the second heated roller 42 at the above-described pressing position can be similar to the pressing force of the first heated roller 41.

The movement speed at which the second heated roller 42 moves horizontally over the film formation area to press-bond the correction film 15 in a reinforcing manner can be similar to the movement speed at which the first heated roller 41 moves horizontally to the press-bonding the correction film 15.

Furthermore, the filmwelding device 32 has the pilate holding section 50, such as that shown in Fig. 12 and Fig. 13, in a position vertically below the first laminating air cylinder 33 on the plate transporting path.

As shown in Fig. 12 and Fig. 13, the plate holding section 50 has a clip plate supporting plate 51 in the center and a top plate peripheral edge supporting plate 52 surrounding the clip plate supporting plate 51. The clip plate supporting plate 51 and the top plate peripheral edge supporting plate 52 are connected to each other by a plate-shaped connection plate 53. The clip plate supporting plate 51 is formed in a size corresponding to the hand-ring clip plate 7, and the surface is formed with recesses and projections such as to correspond with the shapes of the hand-ring clip plate 7 and the hand ring 8.

The clip plate supporting plate 51 of the plate holding section 50, such as that described above, supports the hand-ring clip plate 7 from underneath when the correction film 15 is press-bonded by the first heated roller 41 and press-bonded in a reinforcing manner by the second heated roller 42. Also at this time, the top plate peripheral edge supporting plate 52 of the plate holding section 50 supports the peripheral edges of the top plate 1 for a metal can from below. As a result, the correction film 15 can be stably press-bonded.

Still further, as shown in Fig. 13, a plate heater 54 is disposed horizontally in a position near the lower section of the clip plate supporting plate 51. When the correction film 15 is press-bonded, the plate heater 54 heats a film formation surface from underneath at a predetermined heating temperature. As a result, the plate heater 54 can assist in the press bonding of the correction film 15. A temperature of 80°C, for example, can be suitably used as the heating temperature of the plate heater 54.

Returning to Fig. 5, an electrical heating furnace 56 serving as a heat treatment means is disposed in a position downstream from the film laminating device 32 on the top plate transport path. The electrical heating furnace 56 performs heat treatment using a heater or the like on the top plate 1 for a metal can transported over the transport path by the transport conveyor 18 after the film laminating device 32 has press-bonded the correction film 15. As a result, adhesion of the correction film 15 to the top plate body 3 can be enhanced. As shown in Fig. 14, the electrical heating furnace 56 is configured such that the top plate 1 for a metal can is transported in an upright state by a transport conveyor 60. The transport conveyor 60 is formed by supporting rods 63 bridging respective pin-link plates 62 of a pair of chains 61 that are provided in parallel on the top plate transport path. The top plate 1 for a metal can is inserted between a fork of each supporting rod 63 and transported. The top plate 1 for a metal can is inserted into and removed from the transport conveyor 60 in a position at both ends of the transport conveyor 60 where each supporting rod 63 is spread at a wide angle.

A halogen heater (not shown) may be provided on the upstream side of the electrical heating furnace 56 to perform preheating.

As shown in Fig. 5, the transport path after the electrical heating furnace 56 is configured by a hanger stacker 58 that transports the top plate 1 for a metal can downstream in suspended state (upright state) using the magnetic force of a magnet.

Furthermore, as shown in Fig. 5, a cooling blower 57 serving as a top plate cooling means is disposed in a position downstream from the electrical heating furnace 56 on the top plate transport path. The cooling blower 57 performs a cooling processing by blowing air on the top plate 1 for a metal can transported on the top plate transport path after receiving the heat treatment by the electrical heating furnace 56.

The cooled top plate 1 for a metal can is then transported to an organizing box (for example, an organizing box within which vertical partitions are placed in parallel) and stored in parallel between the partitions in an upright state.

The operations of each device 19, 20, 21, 23, 32, 56, and 57 performing each processing procedure on a series of lines, such as those described above, are electrically controlled by the above-described controlling section. In each processing procedure, the transport of the top plate 1 for a metal can may temporarily stop for a unit processing time required for each processing procedure as a result of control by the controlling section.

The correction apparatus 17 configured as described above can perform the correction method for a top plate for a metal can of the present invention.

In other words, in the correction apparatus 17, the top plate feeding device 19 feeds the top plate 1 for a metal can onto the top plate transport path. After the top plate 1 for a metal can is successively processed in the cleaning procedure by the top plate cleaning device 20 and in the drying procedure by the top plate drying device 21, and transported to a film feeding position, the film feeding device 23 can place the correction film 15 that has been cut to a size corresponding to the film formation area onto the film formation area.

Then, on the top plate 1 for a metal can that has been transported to the press bonding position after being fed the correction film 15, the film laminating device 32 can press-bond the correction film 15 onto the film formation area by moving the first heated roller 14 having an outer circumferential surface shape corresponding to the surface shape of the film formation area over the film formation area while pressing from above the correction film 15 on the film formation surface toward the film formation area side.

Furthermore, after press bonding of the correction film 15 by the first heated roller 41, the second heated roller 42 can enhance adhesion of the correction film 15 to the top plate body 3 by being moved over the film formation area while pressing from above the correction film 15 toward the film formation area side.

The present invention is not limited to the above-described embodiment, and various modifications can be made as required.

### INDUSTRIAL APPLICABILITY

As described above, in the present invention, the correction film 15 having superior thickness, as well as stability and evenness of the thickness, compared to a liquid coating is press-bonded onto the film formation area with sufficient adhesion by the first heated roller 41 having an outer circumference surface shape corresponding to the surface shape of the film formation area. Therefore, the damaged portion 14 can be suitably corrected, and corrosion of the area on the can interior surface corresponding to the damaged portion 14 can be prevented with certainty. Here, in a conventional correction method using a spray coating, the film thickness of a coating filmis limitedto about 20µm. However, in the present invention, the damaged portion 14 can be suitably corrected using the correction film 15 having a sufficient thickness of about 80µm.

In addition, in the present invention, harmful materials, such as solvents, are not dispersed during press bonding of the correction film 15, unlike during baking finish. Therefore, environmental contamination can be prevented.

### EXPLANATION OF SIGN

1 top plate for a metal can
3 top plate body
5 laminated layer
7 clip plate
8 hand ring
14 damaged portion
15 correction film

## Claims

1. A top plate for a metal can comprising:
a top plate body made of a laminated metal sheet of which at least one surface in a thickness direction is formed by a laminated layer;
a clip plate for attaching a hand ring that is spot-welded onto another surface in the thickness direction of the top plate body; and
a hand ring that is attached between the clip plate and the top plate body by a base end section such as to stand upright and collapse freely, wherein
a correction film for correcting a damaged portion of the laminated layer damaged by spot welding is formed over a film formation area in a predetermined area including the damaged portion on the one surface of the top plate body, and
the correction film is press-bonded onto the film formation area by a heated roller having an outer circumferential surface shape corresponding to a surface shape of the film formation area.

2. The top plate for a metal can according to claim 1, wherein the correction film is made of a same resin material as the laminated layer.

3. A correction method for a top plate for a metal can that corrects a damaged portion of a laminate layer of a top plate for a metal can damaged by spot welding, the top plate for a metal can including a top plate body made of a laminated metal sheet of which at least one surface in a thickness direction is formed by the laminated layer, a clip plate for attaching a hand ring that is spot-welded onto another surface in the thickness direction of the top plate body, and a hand ring that is attached between the clip plate and the top plate body by a base end section such as to stand upright and collapse freely, wherein:
in a state in which a correction film of a size corresponding to a film formation area in a predetermined area including the damagedportion on the one surface of the top plate body is disposed on the film formation area, a heated roller having an outer circumferential surface shape corresponding to a surface shape of the film formation area is relatively moved over the film formation area while pressing from above the correction film towards the film formation area side, thereby press bonding the correction film onto the film formation area.

4. The correction method for a top plate for a metal can according to claim 3, wherein:
a section in a predetermined area of the top plate body is a spot welding area in which a plurality of welding points for spot welding between the top plate body and the clip plate are to be formed, and the clip plate is to be spot-welded,
in the spot welding area, the other surface in the thickness direction projects towards another side in the thickness direction and the one surface in the thickness direction is formed recessing towards the other side in the thickness direction, and
when press bonding the correction film, a heated roller of which a section of the outer circumferential surface projects in correspondence with the one surface of the spot welding area is used as the heated roller.

5. The correction method for a top plate for a metal can according to claim 3 or 4, wherein, after the heated roller presses the correction film, a second heated roller is relatively moved over the film formation area while pressing from above the correction film towards the film formation area side, thereby strengthening adhesion of the correction film to the top plate body.

6. A correction apparatus for a top plate for a metal can that corrects a damaged portion of a laminate layer of a top plate for a metal can damaged by spot welding, the top plate for a metal can including a top plate body made of a laminated metal sheet of which at least one surface in a thickness direction is formed by the laminate layer, a clip plate for attaching a hand ring that is spot-welded onto another surface in the thickness direction of the top plate body, and a hand ring that is attached between the clip plate and the top plate body by a base end section such as to stand upright and collapse freely, the correction apparatus comprising:
a top plate transporting means for transporting the top plate for a metal can on a predetermined transport path;
a top plate feeding means capable of successively feeding a plurality of top plates for a metal can onto the transport path one top plate at a time, and a top plate drying means for heating the top plate for a metal can, the top plate drying means being disposed in a position downstream from the top plate feeding means on the transport path;
a film feeding means for feeding a correction film cut into a size corresponding to a film formation area in a predetermined area including the damaged portion on the one surface of the top plate body onto the film formation area of the top plate for a metal can after drying by the top plate drying means, the film feeding means being disposed in a position downstream from the top plate drying means on the transport path;
a film laminating means for press-bonding the correction film onto the film formation area on the top plate for a metal can after feeding of the correction film by the film feeding means, the film laminating means being disposed in a position downstream from the film feeding means on the transport path;
a heat treatment means for performing heat treatment on the top plate for a metal can to strengthen adhesion of the correction film onto the top plate body after press bonding of the correction film by the film laminating means, the heat treatment means being disposed in a position downstream from the film laminating means on the transport path; and
a top plate cooling means for cooling the top plate for a metal can after the heat treatment by the heat treatment means, the top plate cooling means being disposed in a position downstream from the heat treatment means on the transport path, wherein
the film laminating means includes
a first heated roller having an outer circumferential surface shape corresponding to a surface shape of the film formation area and a outer circumferential surface shape of which a section of the outer circumferential surface projects outward to correspond to the surface shape of an area in a predetermined area corresponding to a plurality of welding points for spot welding within the film formation area,
a first pressing means for pressing the first heated roller from above the correction film fed onto the film formation area towards the film formation area side,
a first moving means for relatively moving the first roller over the film formation area while being pressed by the first pressing means,
a second heated roller,
a second pressing means for pressing, after press bonding of the correction film by the first heated roller, the second heated roller from above the press-bonded correction film towards the film formation area side, and
a second moving means for relatively moving the second roller over the film formation area while being pressed by the second pressing means.

7. A correction apparatus for a top plate for a metal can that corrects a damaged portion of a laminated layer of a top plate for a metal can damaged by spot welding, the top plate for a metal can including a top plate body made of a laminated metal sheet of which at least one surface in a thickness direction is formed by the laminated layer, a clip plate for attaching a hand ring that is spot-welded onto another surface in the thickness direction of the top plate body, and a hand ring that is attached between the clip plate and the top plate body by a base end section such as to stand upright and collapse freely, the correction apparatus comprising:
a top plate transporting means for transporting the top plate for a metal can on a predetermined transport path;
a top plate feeding means capable of successively feeding a plurality of top plates for a metal can onto the transport path one top plate at a time;
a top plate cleaning means for wiping clean the top plate for a metal can fed onto the transport path by the top plate feeding means using a cleaning solution, the top plate cleaning means being disposed in a position down stream from the top plate feeding means on the transport path;
a top plate drying means for drying the top plate for a metal can using hot air after cleaning by the top plate cleaning means, the top plate drying means being disposed in a position downstream from the top plate cleaning means on the transport path;
a film feeding means for feeding a correction film cut into a size corresponding to a film formation area in a predetermined area including the damaged portion on the one surface of the top plate body onto the film formation area of the top plate for a metal can after drying by the top plate drying means, the film feeding means being disposed in a position downstream from the top plate drying means on the transport path;
a film laminating means for press-bonding the correction film onto the film formation area on the top plate for a metal can after feeding of the correction film by the film feeding means, the film laminating means being disposed in a position downstream from the film feeding means on the transport path;
a heat treatment means for performing heat treatment on the top plate for a metal can to strengthen adhesion of the correction film onto the top plate body after press bonding of the correction film by the film laminating means, the heat treatment means being disposed in a position downstream from the film laminating means on the transport path; and
a top plate cooling means for cooling the top plate for a metal can after the heat treatment by the heat treatment means, the top plate cooling means being disposed in a position downstream from the heat treatment means on the transport path, wherein
the film laminating means includes
a first heated roller having an outer circumferential surface shape corresponding to a surface shape of the film formation area and a outer circumferential surface shape of which a section of the outer circumferential surface projects outward to correspond to the surface shape of an area in a predetermined area corresponding to a plurality of welding points for spot welding within the film formation area,
a first pressing means for pressing the first heated roller from above the correction film fed onto the film formation area towards the film formation area side,
a first moving means for relatively moving the first roller over the film formation area while being pressed by the first pressing means,
a second heated roller,
a second pressing means for pressing, after press bonding of the correction film by the first heated roller, the second heated roller from above the press-bonded correction film towards the film formation area side, and
a second moving means for relatively moving the second roller over the film formation area while being pressed by the second pressing means.
